# EUROPEAN PATENT SPECIFICATION

(11) **EP 2 791 230 B1**
(45) Date of publication and mention of the grant of the patent: **16.09.2015**
(21) Application number: 12809051.1
(22) Date of filing: 13.12.2012
(51) Int. Cl.: C08K 5/00, C08K 5/14, C08K 5/56

(54) **UNSATURATED METAL COMPOUND COAGENT FOR FREE RADICAL CURING FLUOROELASTOMERS**
UNGESÄTTIGTES METALLVERBINDUNGSCOAGENS FÜR HÄRTBARE FLUORELASTOMERE MIT FREIEN RADIKALEN
COAGENT DE COMPOSÉ MÉTALLIQUE INSATURÉ POUR FLUOROÉLASTOMÈRES À DURCISSEMENT RADICALAIRE

(30) Priority: 15.12.2011 US 201113326400
(43) Date of publication of application: 22.10.2014
(73) Proprietor: E. I. du Pont de Nemours and Company, Wilmington, DE 19898 (US)
(72) Inventor: LYONS, Donald F., Wilmington, Delaware 19805 (US); MORKEN, Peter A., Wilmington, Delaware 19810 (US); SCHMIEGEL, Walter W., Wilmington, Delaware 19807 (US)
(74) Representative: Heinemann, Monica
(86) International application number: PCT/US2012/069441
(87) International publication number: WO 2013/090535

(56) References cited:
- US-A- 5 656 697
- US-A- 5 789 489
- US-A1- 2002 026 014
- US-A1- 2003 104 219

## Description

### FIELD OF THE INVENTION

This invention relates to curable fluoroelastomer compositions comprising i) a fluoroelastomer having chloro-, bromo, or iodo cure sites, ii) a free radical generating compound and iii) an unsaturated metal compound coagent.

### BACKGROUND OF THE INVENTION

Fluoroelastomers having excellent heat resistance, oil resistance, and chemical resistance have been used widely for sealing materials, containers and hoses. Examples of fluoroelastomers include copolymers comprising units of vinylidene fluoride (VF₂) and units of at least one other copolymerizable fluorine-containing monomer such as hexafluoropropylene (HFP), tetrafluoroethylene (TFE), chlorotrifluoroethylene (CTFE), vinyl fluoride (VF), and a fluorovinyl ether such as a perfluoro(alkyl vinyl ether) (PAVE). Specific examples of PAVE include perfluoro(methyl vinyl ether), perfluoro(ethyl vinyl ether) and perfluoro(propyl vinyl ether). Other fluoroelastomers include copolymers comprising tetrafluoroethylene and perfluoro(methyl vinyl ether).

In order to fully develop physical properties such as tensile strength, elongation, and compression set, elastomers must be cured, i.e. vulcanized or crosslinked. In the case of fluoroelastomers, this is generally accomplished by mixing uncured polymer (i.e. fluoroelastomer gum) with a polyfunctional curing agent and heating the resultant mixture, thereby promoting chemical reaction of the curing agent with active sites along the polymer backbone or side chains. Interchain linkages produced as a result of these chemical reactions cause formation of a crosslinked polymer composition having a three-dimensional network structure.

Commonly employed curing agents for fluoroelastomers include the combination of a free radical generator, e.g. an organic peroxide, with a multifunctional coagent. A metal oxide is typically added to the composition in order to improve retention of elastomer physical properties (e.g. elongation and tensile strength) at high temperature (>200°C).

Fluoroelastomers having nitrile cure sites have been cured with organotin compounds containing at least one allyl-, propargyl-, or allenyltin curative in US 4,394,489. No free radical generating compound was present in the curing system.

US 5,447,993 describes the dual cure of nitrile-containing fluoroelastomers with peroxide, a coagent, and a catalyst that causes crosslinks to form using the nitrile groups. The catalyst is typically an organotin compound.

US 5,656,697 and US 5,902,857 describe a peroxide-curable fluoroelastomer comprising metal hydride, peroxide, and multifunctional coagent.

US 6,884,860 and 6,916,871 describe curable fluoropolymer compositions comprising metal hydrides.

WO 2004/106397 describes a natural rubber latex grafted with a tin-containing monomer.

Poly(chlorotrifluoroethylene) plastic has been functionalized with allyltributyltin and AIBN in refluxing benzene to replace chlorine atoms with allyl groups (R. T. Taylor et. al., Heteroatom Chemistry 1995, 6, 585-587).

### SUMMARY OF THE INVENTION

In one aspect, the present invention is a curable fluoroelastomer composition comprising:
A) a fluoroelastomer having chloro, bromo or iodo cure sites;
B) a free radical generating compound; and
C) an unsaturated metal compound coagent having the formula Y₍₄₋ₙ₎MXₙ wherein Y is selected from alkyl, aryl, carboxylic acid, or alkyl ester groups; M is selected from Si, Ge, Sn, or Pb; X is an allyl group CR¹R²CR³=CR⁴R⁵, vinyl group CR¹=CR²R³, allenyl group CR¹=C=CR²R³, alkynyl group C≡CR¹, or propargyl group CR¹R²C=CR³; R¹-R⁵ are selected independently from the group consisting of H, F, alkyl, aryl, heterocycle, or perfluoroalkyl groups; and n is 1, 2, or 3.

### DETAILED DESCRIPTION OF THE INVENTION

The curable compositions of this invention comprise a free radical curable fluoroelastomer, a free radical generating compound and an unsaturated metal compound coagent. Such compositions cure well, exhibit good (i.e. low) compression set resistance and process well (i.e. have reduced polymer viscosity compared to similar compositions not containing the unsaturated metal compound coagent).

By "free radical curable" is meant fluoroelastomers that contain Cl, Br or I cure sites along the polymer chain, at chain ends or in both locations.

Cure sites along the fluoroelastomer chain are typically due to copolymerized cure site monomers that contain chlorine, bromine or iodine atoms. Examples of suitable cure site monomers include, but are not limited to: i) bromine -containing olefins; ii) iodine-containing olefins; iii) bromine-containing vinyl ethers; iv) iodine-containing vinyl ethers; v) chloro-containing olefins; and vi) chlorine-containing vinyl ethers.

Brominated cure site monomers may contain other halogens, preferably fluorine. Examples of brominated olefin cure site monomers are CF₂=CFOCF₂CF₂CF₂OCF₂CF₂Br; bromotrifluoroethylene; 4-bromo-3,3,4,4-tetrafluorobutene-1 (BTFB); and others such as vinyl bromide; 1-bromo-2,2-difluoroethylene; perfluoroallyl bromide; 4-bromo-1,1,2-trifluorobutene-1; 4-bromo-1,1,3,3,4,4,-hexafluorobutene; 4-bromo-3-chloro-1,1,3,4,4-pentafluorobutene; 6-bromo-5,5,6,6-tetrafluorohexene; 4-bromoperfluorobutene-1 and 3,3-difluoroallyl bromide. Brominated vinyl ether cure site monomers useful in the invention include 2-bromo-perfluoroethyl perfluorovinyl ether and fluorinated compounds of the class CF₂Br-R_{f}-O-CF=CF₂ (R_{f} is a perfluoroalkylene group), such as CF₂BrCF₂O-CF=CF₂, and fluorovinyl ethers of the class ROCF=CFBr or ROCBr=CF₂ (where R is a lower alkyl group or fluoroalkyl group) such as CH₃OCF=CFBr or CF₃CH₂OCF=CFBr.

Suitable iodinated cure site monomers include iodinated olefins of the formula: CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, and the like, wherein n=1-3, such as disclosed in U.S. Patent 5,717,036. In addition, suitable iodinated cure site monomers including iodoethylene; 4-iodo-3,3,4,4-tetrafluorobutene-1 (ITFB); 3-chloro-4- iodo-3,4,4-trifluorobutene; 2-iodo -1,1,2,2-tetrafluoro-1-(vinyloxy)ethane; 2- iodo-1-(pertluorovinyloxy)-1,1,-2,2-tetrafluoroethylene; 1,1,2,3,3,3-hexafluoro-2-iodo-1-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

Suitable chlorinated cure site monomers include any of the above cure site monomers wherein bromine or iodine atoms are replaced by chlorine atoms. Chlorotrifluoroethylene (CTFE), vinyl chloride and vinylidene chloride are further examples.

Additionally, chlorine-containing endgroups, iodine-containing endgroups, bromine-containing endgroups or mixtures thereof may optionally be present at one or both of the fluoroelastomer polymer chain ends as a result of the use of chain transfer or molecular weight regulating agents during preparation of the fluoroelastomers. The amount of chain transfer agent, when employed, is calculated to result in an iodine, bromine or chlorine level in the fluoroelastomer in the range of 0.005-5 wt.%, preferably 0.05-3 wt.%.

Examples of chain transfer agents include iodine-containing compounds that result in incorporation of a bound iodine atom at one or both ends of the polymer molecules. Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,6-diiodoperfluorohexane; 1,3-diiodo-2-chloroperfluoropropane; 1,2-di(iododifluoromethyl)-perfluorocyclobutane; monoiodoperfluoroethane; monoiodoperfluorobutane; 2-iodo-1-hydroperfluoroethane, etc. Also included are the cyano-iodine chain transfer agents disclosed in European Patent 0868447A1. Particularly preferred are diiodinated chain transfer agents.

Examples of brominated chain transfer agents include 1-bromo-2-iodoperfluoroethane; 1-bromo-3-iodoperfluoropropane; 1-iodo-2-bromo-1,1-difluoroethane and others such as disclosed in U.S. Patent 5,151,492.

Examples of chlorinated chain transfer agents include carbon tetrachloride, methylene chloride and chloroform.

Specific examples of fluoroelastomers that may be employed in the invention include, but are not limited to copolymers comprising i) vinylidene fluoride, hexafluoropropylene and optionally tetrafluoroethylene, ii) vinylidene fluoride, perfluoro(methyl vinyl ether) and optionally tetrafluoroethylene, iii) tetrafluoroethylene and perfluoro(methyl vinyl ether), and iv) tetrafluoroethylene and propylene. All of the latter polymers having chlorine, iodine or bromine atoms along the polymer chain, at the ends or both.

Compositions of the invention also contain at least one free radical generating compound. By "free radical generating compound" is meant a compound that upon exposure to heat or actinic radiation decomposes, forming radicals. This includes organic peroxides and photoinitiators.

Organic peroxides suitable for use in the compositions of the invention include, but are not limited to 1,1-bis(t-butylperoxy)-3,5,5-trimethylcyclohexane; 1,1-bis(t-butylperoxy)cyclohexane; 2,2-bis(t-butylperoxy)octane; n-butyl-4, 4-bis(t-butylperoxy)valerate; 2,2-bis(t-butylperoxy)butane; 2,5-dimethylhexane-2,5-dihydroxyperoxide; di-t-butyl peroxide; t-butylcumyl peroxide; dicumyl peroxide; alpha, alpha'-bis(t-butylperoxy-m-isopropyl)benzene; 2,5-dimethyl-2,5-di(t-butylperoxy)hexane; 2,5-dimethyl-2,5-di(t-butylperoxy)hexene-3; benzoyl peroxide, t-butylperoxybenzene; 2,5-dimethyl-2,5-di(benzoylperoxy)-hexane; t-butylperoxymaleic acid; and t-butylperoxyisopropylcarbonate. Preferred examples of organic peroxides include 2,5-dimethyl-2,5-di(t-butylperoxy)hexane, dicumyl peroxide, and alpha, alpha'-bis(t-butylperoxy-m-isopropyl)benzene. The amount compounded is generally in the range of 0.05-5 parts by weight, preferably in the range of 0.1-3 parts by weight per 100 parts by weight of the fluoroelastomer. This particular range is selected because if the peroxide is present in an amount of less than 0.05 parts by weight, the vulcanization rate is insufficient and causes poor mold release. On the other hand, if the peroxide is present in amounts of greater than 5 parts by weight, the compression set of the cured polymer becomes unacceptably high. In addition, the organic peroxides may be used singly or in combinations of two or more types. In instances where a slow rate of cure is acceptable, the peroxide may be omitted or used at very low level such as 0.02-0.05 phr.

Photoinitiators that may be employed in the compositions of the invention include, but are not limited to benzophenone; acetophenone; benzil; benzaldehyde; o-chlorobenzaldehyde; xanthone; thioxanthone; 9,10-anthraquinone; 1-hydroxycyclohexyl phenyl ketone; 2,2-diethoxyacetophenone; dimethoxyphenylacetophenone; methyl diethanolamine; dimethylaminobenzoate; 2-hydroxy-2-methyl-1-phenylpropane-1-one; 2,2-di-sec-butoxyacetophenone; 2,2-dimethoxy-1,2-diphenylethan-1-one; benzil dimethoxyketal; benzoin methyl ether; and phenyl glyoxal. The amount compounded is generally in the range of 0.05-5 parts by weight, preferably in the range of 0.1-3 parts by weight per 100 parts by weight of the fluoroelastomer.

The unsaturated metal compound coagent employed in the compositions of the invention is a derivative of silicon, germanium, tin, or lead that has at least one vinyl, allyl, allenyl, alkynyl, or propargyl group attached to the metal. The general formula is Y₍₄₋ₙ₎MXₙ wherein Y is selected from alkyl, aryl, carboxylic acid, or alkyl ester groups. The Y groups on one molecule of this coagent may be selected from more than one group. M is selected from Si, Ge, Sn, or Pb; X is an allyl group CR¹R²CR³=CR⁴R⁵, vinyl group CR¹=CR²R³, allenyl group CR¹=C=CR²R³, alkynyl group C≡CR¹, or propargyl group CR¹R²C≡CR³; R¹-R⁵ are selected independently from the group consisting of H, F, alkyl, aryl, heterocycle, or perfluoroalkyl groups; and n is 1, 2, or 3. The R¹-R⁵ group may be a mixed alkyl and perfluoroalkyl group such as CF₃(CF₂)₅CH₂CH₂-. Preferred for Y groups are phenyl groups or alkyl groups. Most preferred Y groups are alkyl groups, particularly where each alkyl group has 4, 6 or 8 carbon atoms. Carboxylic acid Y groups can be for example octanoic or stearic acid or a diacid such as maleic acid. Allyl and vinyl groups are preferred for X and allyl is most preferred. It is preferred that n is 1 or 2 and most preferred that n is 1. It is preferred that the R¹⁻⁵ groups be H or F and most preferably H. Introduction of an excess of non-hydrogen R groups on the unsaturated X group can be detrimental to performance due to steric hindrance. However introduction of 1, 2 or 3 non-hydrogen groups can in some instances improve performance. The syntheses of unsaturated tin compounds is described for example in Organotin Chemistry, 2nd Ed. (Wiley-VCH, 2004, Weinheim, Germany, Alwyn G. Davies author).

Specific examples of unsaturated metal compound coagents suitable for use in this invention include, but are not limited to allyltributyltin, methallyltri-n-butyltin, diallyldibutyltin, allyltriphenyltin, tributyl(vinyl)tin, diallyldioctyltin, allyltriphenylstannane, allyltriphenylgermane, allyltriphenylplumbane, vinyltriphenyltin, allyltriphenylsilane, allyltrioctylstannane, allyltrioctylgermane, vinyltrioctylstannane, and divinyldioctylstannane.

The amount of unsaturated metal compound can be about 0.1 to 8 parts by weight, preferably 0.2 to 4 parts by weight, more preferably 0.5 to 3 parts by weight per 100 parts by weight fluoroelastomer. The amount of unsaturated metal compound can in some instances be approximated by calculating the ratio of total moles of chlorine, bromine, and iodine to the moles of silicon, germanium, tin, and lead. Good balance of properties is likely to be attained at ratios of 0.5-3:1 or 1-2:1. Many experiments in this invention were fixed at the ratio of 1.5:1. However this ratio guideline is not followed for polymers that have large number of free-radical curable halogens, such as CTFE polymers with greater than about 5 wt% CTFE monomer.

Compositions of the invention have a lower viscosity than do similar compositions that lack the unsaturated metal compound coagent. Without being bound by theory, it is believed that the unsaturated metal compounds of this invention reduce viscosity of rubber compounds by interacting with the acid or salt endgroups of the fluoroelastomer.

Optionally, the compositions of the invention may further comprise a conventional multifunctional coagent of the type typically employed in the free radical curing of fluoroelastomers. Such multifunctional coagents include, but are not limited to unsaturated compounds such as triallyl cyanurate, trimethacryl isocyanurate, triallyl isocyanurate, trimethallyl isocyanurate, triacryl formal, triallyl trimellitate, N,N'-m-phenylene bismaleimide, diallyl phthalate, tetraallylterephthalamide, tri(diallylamine)-s-triazine, triallyl phosphite, bis-olefins and N,N-diallylacrylamide. When present, the amount compounded is generally in the range of 0.1-10 (preferably 0.2 - 6) parts by weight per 100 parts by weight of the fluoroelastomer. The optional unsaturated compounds may be used singly or as a combination of two or more types.

The curable compositions of the invention may also optionally contain 1 to 20 parts by weight (preferably 2 to 6 parts) of at least one acid acceptor (e.g. zinc oxide, magnesium oxide, calcium hydroxide, hydrotalcite).

Other ingredients (e.g. fillers, colorants, process aids, etc.) commonly employed in elastomer compositions may also be included in the curable compositions of the invention.

The fluoroelastomer, free radical generating compound, unsaturated metal compound coagent and any other ingredients are generally incorporated into a curable composition by means of an internal mixer or rubber mill. The resulting composition may then be shaped (e.g. molded or extruded) and cured to form a fluororubber article. Curing typically takes place at about 150°-200°C for 1 to 60 minutes. Conventional rubber curing presses, molds, extruders, and the like provided with suitable heating and curing means can be used. Also, for optimum physical properties and dimensional stability, it is preferred to carry out a post curing operation wherein the molded or extruded fluororubber article is heated in an oven or the like for an additional period of about 1-48 hours, typically from about 180°-275°C.

### EXAMPLES

### TEST METHODS

Cure characteristics were measured using a Monsanto Moving Die Rheometer (MDR 2000) instrument under the following conditions:
Moving die frequency: 1.66 Hz
Oscillation amplitude: 0.5
Temperature: 177°C unless otherwise indicated
Duration of test: 24 minutes

The following cure parameters were recorded:
M_{H}: maximum torque level, in units of dN·m
M_{L}: minimum torque level, in units of dN·m
tₛ2: minutes to 2 units rise above M_{L}
t_{c}90: minutes to 90% of maximum torque

Tensile properties were determined by ASTM D412.

Compression set resistance was measured according to ASTM D395.

¹H and ¹³C NMR spectra were measured on Bruker 400 or 500 MHz spectrometers using accepted acquisition and data processing protocols. ¹¹⁹Sn NMR spectra were run on the neat sample with a DMSO-*d₆* capillary for lock in a 10 mm BB probe on a Varian 400 MHz Direct Drive NMR at 25°C using a spectra width of 156250, nonspinning, an acquisition time of 1.2 sec, and a recycle delay of 60 sec. Samples were externally referenced to neat Bu₄Sn unlocked at -12 ppm.

The invention is further illustrated by, but is not limited to, the following examples.

### Example 1 and Comparative Example A

Curable compositions for Example 1 and Comparative Example A were made by compounding the ingredients on a two-roll mill. Formulations are shown in Table I. Fluoroelastomer 1 was Piton® GF-600S, a copolymer of vinylidene fluoride, hexafluoropropylene and tetrafluoroethylene containing iodine cure sites, available from DuPont.

Cure characteristics are also shown in Table I. Surprisingly, the allylating agent allyltributyltin (Example 1) caused the fluoroelastomer containing iodine groups to cure, but the allylating agent diallyl oxalate (Comp. Ex. A) did not cure the elastomer as evidenced by the low MH value and the fact that the MDR disc material still flowed well after being heated to 177°C for 24 minutes.

**TABLE I**

| Ingredient, phr¹ | Example 1 | Comp. Example A |
|---|---|---|
| Fluoroelastomer 1 | 100 | 100 |
| Allyltributylstannane | 0.5 | 0 |
| Diallyl Oxalate | 0 | 0.5 |
| VAROX DBPH-50² | 0.5 | 0.5 |
| ELASTOMAG 170³ | 3 | 3 |
| | | |

| **Curing characteristics** | | |
|---|---|---|
| ML, dNm | 0.91 | 0.81 |
| MH, dNm | 6.89 | 1.33 |
| ts2, minutes | 1.06 | - |
| t50, minutes | 1.27 | 3.09 |
| t90, minutes | 2.92 | 9.55 |

| | | |
|---|---|---|
| ¹ parts by weight per hundred parts rubber (i.e. fluoroelastomer) ² organic peroxide available from R.T. Vanderbilt Co., Inc. ³ magnesium oxide available from Akrochem Corp., Akron, OH | | |

### Examples 2-4 and Comparative Examples B-C

Curable compositions for Examples 2-4 of the invention and Comparative Examples B-C were made by compounding the ingredients on a two roll mill. Formulations are shown in Table II. Fluoroelastomer 2 was Viton® GBL900, a vinylidene fluoride, hexafluoropropylene, tetrafluoroethylene copolymer having bromine cure sites, available from DuPont.

The compositions were molded into slabs and o-rings by press curing at 177°C for 10 minutes. Cured parts were then post-cured for 16 hours at 232°C in air.

The cure data shows crosslinking of a bromine-containing elastomer when allyltributylstannane was used as the sole curative. A higher state of cure was observed when allyltributylstannane was used in combination with triallyl isocyanurate (TAIC).

**TABLE II**

| Ingredient, phr | Comp. Example B | Comp. Example C | Example 2 | Example 3 | Example 4 |
|---|---|---|---|---|---|
| Fluoroelastomer 2 | 100 | 100 | 100 | 100 | 100 |
| TAIC⁴ | 3 | 4 | | 1.5 | 3 |
| Allyltributylstannane | | | 3.0 | 0.90 | 1.8 |
| MT Black | 30 | 30 | 30 | 30 | 30 |
| VAROX DBPH-50 | 2 | 2 | 2 | 2 | 2 |
| ELASTOMAG 170 | 3 | 3 | 3 | 3 | 3 |
| Micro-cel E⁵ | 1 | 1 | 1 | 1 | 1 |

| **Curing Characteristics** | | | | | |
|---|---|---|---|---|---|
| ML, dNm | 2.77 | 2.6 | 2.41 | 2.44 | 2.17 |
| MH, dNm | 18.37 | 20.15 | 18.67 | 19.5 | 26.16 |
| ts2, minutes | 0.8 | 0.81 | 0.6 | 0.65 | 0.63 |
| t50, minutes | 1.31 | 1.36 | 1.11 | 1.11 | 1.16 |
| t90, minutes | 4.03 | 4 | 3.24 | 3.2 | 2.97 |

| **25% Deflection Compression Set** | | | | | |
|---|---|---|---|---|---|
| Compression Set 200°C 70h, % | 47 | 46 | 29 | 35 | 23 |
| Compression Set 225°C 70h, % | 67 | 59 | 43 | 59 | 39 |
| Compression Set 250°C 70h, % | 83 | 78 | 76 | 84 | 67 |
| Compression Set 250°C 168h, % | 101 | 101 | 96 | 98 | 81 |
| | | | | | |

| **Physical Properties** | | | | | |
|---|---|---|---|---|---|
| Hardness, Shore A | 73 | 74 | 72 | 73 | 77 |
| M50, MPa | 2.44 | 3.03 | 2.41 | 2.64 | 3.86 |
| M100, MPa | 7.61 | 9.23 | 6.01 | 7.62 | 13.41 |
| Tb, MPa | 14.02 | 12.57 | 17.2 | 18.49 | 17.27 |
| Eb (%) | 138 | 124 | 208 | 174 | 115 |

| **Retention of Physical Properties After Age 275°C/air/70h** | | | | | |
|---|---|---|---|---|---|
| Hardness, %retention | 96 | 97 | 117 | 95 | 97 |
| M50, %retention | 68 | 65 | 235 | 82 | 102 |
| M100, %retention | 39 | 44 | 0 | 57 | 0 |
| Tb, %retention | 55 | 70 | 54 | 43 | 56 |
| Eb, %retention | 173 | 180 | 38 | 89 | 82 |

| | | | | | |
|---|---|---|---|---|---|
| ⁴ Diak 7 available from DuPont ⁵ Calcium metasilicate available from Celite Corporation | | | | | |

### Examples 5-10 and Comparative Examples D-F

Curable compositions for Examples 5-10 and Comparative Examples D-F were made by compounding the ingredients on a two roll mill. Formulations are shown in Table III. Fluoroelastomer 2 was Viton® GBL900, a vinylidene fluoride, hexafluoropropylene, tetrafluoroethylene copolymer having bromine cure sites, available from DuPont.

The compositions were molded into slabs and o-rings by press curing at 177°C for 15 and 10 minutes, respectively. The cured parts were then post-cured for 16 hours at 232°C in air. Cure characteristics and physical properties are shown in Table III.

This data shows crosslinking of a bromine-containing elastomer when methallyltri-n-butyltin, diallyldibutyltin, or allyltriphenyltin was used as the sole curative. The cure state increased when these curatives were used in combination with TAIC. Tetraallyltin gave a poor cure response when used as the sole curative.

**TABLE III**

| Ingredient, phr | Comp. Ex. D | Ex. 5 | Ex. 6 | Ex. 7 | Ex. 8 | Comp. Ex. E | Comp. Ex. F | Ex. 9 | Ex. 10 |
|---|---|---|---|---|---|---|---|---|---|
| Fluoroelastomer 2 | 100 | 100 | 100 | 100 | 100 | 100 | 100 | 100 | 100 |
| TAlC | 3 | 3 | | 3 | | 3 | | 3 | |
| Methallyltri-n-butyltin | | 1.9 | 1.9 | | | | | | |
| Diallyldibutyltin | | | | 0.86 | 0.86 | | | | |
| Tetraallyltin | | | | | | 0.4 | 0.4 | | |
| Allyltriphenyltin | | | | | | | | 2.1 | 2.1 |
| MT Black | 30 | 30 | 30 | 30 | 30 | 30 | 30 | 30 | 30 |
| VAROX DBPH-50 | 2 | 2 | 2 | 2 | 2 | 2 | 2 | 2 | 2 |
| ELASTOMAG 170 | 3 | 3 | 3 | 3 | 3 | 3 | 3 | 3 | 3 |
| Micro-cel E | 1 | 1 | 1 | 1 | 1 | 1 | 1 | 1 | 1 |

| **Curing characteristics** | | | | | | | | | |
|---|---|---|---|---|---|---|---|---|---|
| ML, dNm | 2.66 | 1.88 | 2.54 | 2.32 | 2.77 | 2.91 | 3.48 | 2.28 | 2.66 |
| MH, dNm | 18.61 | 21.2 | 13.93 | 23.64 | 14.85 | 18.83 | 8.63 | 26.67 | 17.85 |
| ts2, minutes | 0.77 | 0.67 | 0.89 | 0.65 | 0.69 | 0.73 | 1.57 | 0.66 | 0.64 |
| t50, minutes | 1.27 | 1.34 | 1.67 | 1.28 | 1.26 | 1.38 | 2.03 | 1.2 | 1.27 |
| t90, minutes | 3.7 | 3.62 | 4.69 | 3.71 | 3.82 | 3.92 | 6.65 | 3.78 | 5.12 |

| **25% Deflection Compression Set** | | | | | | | | | |
|---|---|---|---|---|---|---|---|---|---|
| Compression Set 200°C 70h, % | 50 | 31 | 51 | 29 | 41 | 39 | 77 | 29 | 39 |
| Compression Set 225°C 70h, % | 63 | 46 | 73 | 46 | 59 | 60 | 97 | 50 | 59 |
| Compression Set 250°C 70h, % | 79 | 64 | 92 | 59 | 85 | 77 | 98 | 60 | 81 |
| | | | | | | | | | |

| **Physical Properties,** | | | | | | | | | |
|---|---|---|---|---|---|---|---|---|---|
| Hardness, Shore A | 74 | 77 | 69 | 75 | 69 | 73 | 67 | 78 | 72 |
| M50, MPa | 2.38 | 3.14 | 1.78 | 3.49 | 1.77 | 2.7 | 1.48 | 4.15 | 1.98 |
| M100, MPa | 7.18 | 9.18 | 4.01 | 12.04 | 4.17 | 8.67 | 2.52 | 14.52 | 4.63 |
| Tb, MPa | 19.06 | 17.81 | 18.26 | 19.68 | 18.74 | 16.7 | 16.7 | 15.39 | 17.95 |
| Eb (%) | 183 | 159 | 265 | 136 | 232 | 154 | 327 | 103 | 216 |

### Examples 11-12 and Comparative Example G

Curable compositions for Examples 11-12 and Comparative Example G were made by compounding the ingredients on a two roll mill. Formulations are shown in Table IV. Fluoroelastomer 2 was Viton® GBL900, a vinylidene fluoride, hexafluoropropylene, tetrafluoroethylene copolymer having bromine cure sites, available from DuPont.

The compositions were molded into slabs and o-rings by press curing at 177°C for 15 and 10 minutes, respectively. The cured parts were then post-cured for 16 hours at 232°C in air. Cure characteristics and physical properties are shown in Table IV.

This data shows crosslinking of a bromine-containing fluoroelastomer when tributyl(vinyl)tin was used as the sole curative. The cure state increased when this curative was used in combination with TAIC. Tri-n-butyltin hydride, gave a poor cure response when used as the sole curative.

**TABLE IV**

| Ingredient, phr | Comp. Example G | Example 11 | Example 12 |
|---|---|---|---|
| Fluoroelastomer 2 | 100 | 100 | 100 |
| TAIC | | | 3 |
| Tri-n-butyltin Hydride | 1.6 | | |
| Tributyl(vinyl)tin | | 1.7 | 1.7 |
| MT Black | 30 | 30 | 30 |
| VAROX DBPH-50 | 2 | 2 | 2 |
| ELASTOMAG 170 | 3 | 3 | 3 |
| Micro-cel E | 1 | 1 | 1 |

| **Curing characteristics** | | | |
|---|---|---|---|
| ML, dNm | 2.63 | 2.28 | 2.76 |
| MH, dNm | 4.9 | 25.2 | 12.4 |
| ts2, minutes | 5.63 | 0.69 | 0.75 |
| t50, minutes | 1.83 | 1.1 | 1.09 |
| t90, minutes | 6.51 | 2.39 | 2.61 |

| **Compression Set, 25% Deflection** | | | |
|---|---|---|---|
| Compression Set 200°C 70h | - | 26 | 54 |
| Compression Set 225°C 70h | - | 43 | 75 |
| Compression Set 250°C 70h | - | 59 | 94 |

| **Physical Properties** | | | |
|---|---|---|---|
| Hardness, Shore A | - | 77 | 76 |
| M50, MPa | - | 3.51 | 1.74 |
| M100, MPa | - | 13.07 | 3.63 |
| Tb, MPa | - | 21.91 | 17.8 |
| Eb (%) | - | 138 | 264 |

| **Retention of Physical Properties After Age 275°C/air/70h** | | | |
|---|---|---|---|
| Hardness, %retention | - | 107 | 96 |
| M50, %retention | - | 165 | 140 |
| M100, %retention | - | 0 | 131 |
| Tb, %retention | - | 56 | 36 |
| Eb, %retention | - | 63 | 51 |

### Example 13 and Comparative Example H

Curable compositions for Example 13 and Comparative Example H were made by compounding the ingredients on a two-roll mill. Formulations are shown in Table V. Fluoroelastomer 3 was a copolymer of tetrafluoroethylene and propylene having Br cure sites.

The compositions were molded into slabs and o-rings by press curing at 177°C for 10 minutes. The cured parts were then post-cured for 16 hours at 232°C in air. Cure characteristics and physical properties are shown in Table V.

**TABLE V**

| Ingredient, phr | Comp. Ex. H | Example 13 |
|---|---|---|
| Fluoroelastomer 3 | 100 | 100 |
| Zinc Oxide | 3 | 3 |
| N990 | 30 | 30 |
| TAIC | 2.5 | 2.5 |
| Allyltributylstannane | | 1.3 |
| Micro-cel E | 1 | 1 |
| Varox DBPH-50 | 2.5 | 2.5 |

| **Cure Characteristics** | | |
|---|---|---|
| ML, dNm | 2.26 | 1.74 |
| MH, dNm | 6.39 | 11.8 |
| ts2, minutes | 0.93 | 0.7 |
| t50, minutes | 0.95 | 1.17 |
| t90, minutes | 2.85 | 3.94 |

| **Compression Set, 25% Deflection** | | |
|---|---|---|
| Compression Set 150°C/168h | 62 | 38 |
| Compression Set 200°C 22h | 54 | 33 |
| Compression Set 200°C 70h | 69 | 46 |
| Compression Set 225°C 70h | 74 | 53 |
| | | |

| **Physical Properties** | | |
|---|---|---|
| Hardness, Shore A | 74 | 71 |
| M50, MPa | 2.38 | 3.21 |
| M100, MPa | 5.33 | 9.11 |
| M200, MPa | 11.53 | 0 |
| Tb, MPa | 12.34 | 19.01 |
| Eb(%) | 246 | 185 |

| **Retention of Physical Properties After Age 250°C/air/70h** | | |
|---|---|---|
| Hardness, %retention | 101 | 110 |
| M50, %retention | 112 | 110 |
| M100, %retention | 129 | 105 |
| Tb, %retention | 131 | 98 |
| Eb, %retention | 94 | 99 |

### Examples 14-15 and Comparative Example I

Curable compositions for Examples 14-15 and Comparative Example I were made by compounding the ingredients on a two-roll mill. Formulations are shown in Table VI. Fluoroelastomer 4 was a copolymer of 38 wt% vinylidene fluoride, 50 wt% perfluoro(methyl vinyl ether) and 12 wt% chlorotrifluoroethylene.

The compositions were molded into slabs and o-rings by press curing at 177°C for 10 minutes. The cured parts were then post-cured for 16 hours at 232°C in air. Cure characteristics and physical properties are shown in Table VI.

**TABLE VI**

| Ingredient, phr | Comp. Ex. I | Example 14 | Example 15 |
|---|---|---|---|
| Fluoroelastomer 4 | 100 | 100 | 100 |
| Zinc Oxide | 3 | 3 | 3 |
| N990 | 30 | 30 | 30 |
| TAIC | 3 | 3 | 3 |
| Allyltributylstannane | | 1 | 2 |
| Micro-cel E | 1 | 1 | 1 |
| Varox DBPH-50 | 3 | 3 | 3 |

| **Curing characteristics** | | | |
|---|---|---|---|
| ML, dNm | 1.65 | 1.18 | 1.02 |
| MH, dNm | 4.36 | 6.02 | 10.78 |
| ts2, minutes | 1.48 | 0.71 | 0.59 |
| t50, minutes | 1.11 | 0.78 | 0.84 |
| t90, minutes | 2.02 | 1.53 | 1.92 |

| **Compression Set, 25% Deflection** | | | |
|---|---|---|---|
| Compression Set 150°C 168h | 85 | 60 | 30 |
| Compression Set 200°C 22h | 84 | 56 | 31 |
| Compression Set 200°C 70h | 94 | 73 | 49 |
| Compression Set 225°C 70h | 106 | 94 | 75 |

| **Physical Properties** | | | |
|---|---|---|---|
| Hardness, Shore A | 65 | 69 | 72 |
| M50, MPa | 1.46 | 1.62 | 1.94 |
| M100, MPa | 1.71 | 2.09 | 3.84 |
| M200, MPa | 2.42 | 3.85 | 0 |
| M300, MPa | 3.28 | 5.55 | 0 |
| Tb, MPa | 3.59 | 5.66 | 11.0 |
| Eb (%) | 341 | 308 | 189 |

| **Retention of Physical Properties After Age 275°C/air/70h** | | | |
|---|---|---|---|
| Hardness, %retention | 94 | 100 | 108 |
| M50, %retention | 83 | 99 | 155 |
| M100, %retention | 78 | 102 | 162 |
| M200, %retention | 71 | 86 | |
| M300, %retention | 18 | 0 | |
| Tb, %retention | 51 | 61 | 67 |
| Eb, %retention | 68 | 66 | 65 |

### Examples 16-17 and Comparative Example J

Curable compositions for Examples 16-17 and Comparative Example J were made by compounding the ingredients on a two-roll mill. Formulations are shown in Table VII. Fluoroelastomer 5 was Viton® GF, a copolymer of vinylidene fluoride, hexafluoropropylene and tetrafluoroethylene containing bromine cure sites, available from DuPont.

The compositions were molded into slabs and o-rings by press curing at 177°C for 15 and 10 minutes, respectively. The cured parts were then post-cured for 16 hours at 232°C in air. Mooney viscosity, cure characteristics and physical properties are shown in Table VII.

This data shows that addition of allyltributylstannane to a bromine-containing fluoroelastomer comprising TFE, VF₂, and HFP provides reduced Mooney viscosity and reduced compression set values.

**TABLE VII**

| Ingredient, phr | Comp. Example J | Example 16 | Example 17 |
|---|---|---|---|
| Fluoroelastomer 5 | 10C | 100 | 100 |
| TAIC | | | 3 |
| Allyltributylstannane | | 1 | 1.9 |
| MT Black | 30 | 30 | 3 |
| VAROX DBPH-50 | 3 | 3 | 3 |
| Zinc Oxide | 3 | | 3 |
| Micro-cel E | 1 | 1 | 1 |

| **Curing Characteristics** | | | |
|---|---|---|---|
| ML, dNm | 2.27 | 1.84 | 1.59 |
| MH, dNm | 15.05 | 15.32 | 20.41 |
| ts2, minutes | 0.6 | 0.55 | 0.49 |
| t50, minutes | 0.94 | 0.86 | 0.83 |
| t90, minutes | 3.6 | 2.97 | 2.08 |

| **Mooney Viscosity 121°C** | | | |
|---|---|---|---|
| ML(1+10) | 89.3 | 56.8 | 49.4 |

| **Compression set, 25% Deflection** | | | |
|---|---|---|---|
| 200°C 70h | 49 | 45 | 36 |
| 225°C 70h | 62 | 62 | 47 |
| 250°C 70h | 89 | 88 | 73 |
| 250°C 168h | 106 | 107 | 102 |

| **Physical Properties** | | | |
|---|---|---|---|
| Hardness, Shore A | 75 | 77 | 79 |
| M50, MPa | 3.08 | 3.48 | 4.15 |
| M100, MPa | 8.76 | 9.82 | 12.58 |
| Tb, MPa | 22.57 | 20.63 | 20.61 |
| Eb (%) | 198 | 172 | 144 |

| **Retention of Physical Properties After Age 275°C/air/70h** | | | |
|---|---|---|---|
| Hardness, %retention | 99 | 99 | 99 |
| M50, %retention | 83 | 87 | 85 |
| M100, %retention | 64 | 73 | 68 |
| Tb, %retention | 68 | 73 | 77 |
| Eb, %retention | 136 | 138 | 139 |

### Examples 18-22 and Comparative Example K

### Preparation of Allyltriphenylgermane

A 4-neck 500 mL flask equipped with a dropping funnel, septa, thermowell adaptor, stir bar, and condenser further attached to a N₂ tee was charged with triphenylchlorogermane (Gelest, 10.2g, 29.5 mmol) and 100 mL dry (activated 4A molecular sieves) heptane. The mixture was heated to 75-90°C. Not all of the triphenylchlorogermane was dissolved at this time. The dropping funnel was charged with allylmagnesium bromide (Aldrich, 1.0M in diethyl ether, 38 mL, 38 mmol) which was then added dropwise to the warm slurry over a 1 hr period. The mixture was refluxed at 66°C for 4 hours, then cooled and allowed to stir overnight. The reaction mixture was cooled in an ice water bath, then 30 mL of saturated aq. ammonium chloride solution was slowly added. The reaction mixture was filtered through a plug of glass wool. The aqueous layer was separated and washed with ether (1x150 mL). The organic layers were combined, dried over CaCl₂, filtered, concentrated on a rotary evaporator to ca. 200 mL of liquid. This liquid was washed with 25% aq. potassium fluoride (1x100 mL), then water (1x100mL), dried over MgSO₄, filtered, concentrated on a rotary evaporator, then further dried at 50°C/0.2 mmHg/2 hours to afford 9.5g of white solid. Recrystallization from hexane gave 5.7g (16.5 mmol, 56% yield) of white crystals, mp 87-88°C (lit. mp 90-91 °C, F. Carre et.al. Journal of Organometallic Chemistry 1970, 22, 589). ¹H NMR CDCl₃ 7.52 (m, 6H), 7.40 (m, 9H), 5.96 (m, 1H), 5.00 (d, 16 Hz, 1 H), 4.95 (dm, 10 Hz, 1 H), 2.53 (dm, 8 Hz, 2H); ¹³C NMR CDCl₃ 136.6, 135.0, 134.5, 129.0, 128.2, 114.5, 21.3.

### Preparation of Allyltriphenylplumbane

Allyltriphenylplumbane was prepared according to the procedure of P.R. Austin Journal of the American Chemical Society 1931, 52, p3514.

Curable compositions for Examples 18-22 and Comparative Example K were made by compounding the ingredients on a two-roll mill. Formulations are shown in Table VIII. Fluoroelastomer 2 was Viton® GBL900, a vinylidene fluoride, hexafluoropropylene, tetrafluoroethylene copolymer having bromine cure sites, available from DuPont.

The compositions were molded into slabs and o-rings by press curing at 177°C for 10 minutes. The samples were then post-cured at 232°C for 16 hours in air. Curing and physical property data are shown in Table VIII.

This data shows that a copolymer of VF₂, TFE, and HFP with Br-cure sites can be crosslinked with allyltriphenylgermane, or allyltriphenylplumbane, and that these compounds in combination with TAIC provided better compression set than curing with TAIC alone. Allyltriphenylsilane as the sole curative had low cure state, but in combination with TAIC provided improved aged tensile properties.

**TABLE VIII**

| Ingredient, phr | Comp. Example K | Example 18 | Example 19 | Example 20 | Example 21 | Example 22 |
|---|---|---|---|---|---|---|
| Fluoroelastomer 2 | 100 | 100 | 100 | 100 | 100 | 100 |
| TAIC | 3 | 3 | | 3 | | 3 |
| Allyltriphenylsilane | | 1.65 | 1.65 | | | |
| Allyltriphenylgermane | | | | 1.89 | 1.89 | |
| Allyltriphenylplumbane | | | | | | 2.62 |
| MT Black | 30 | 30 | 30 | 30 | 30 | 30 |
| VAROX DBPH-50 | 2 | 2 | 2 | 2 | 2 | 2 |
| Zinc Oxide | 3 | 3 | 3 | 3 | 3 | 3 |
| Micro-cel E | | | | | | |

| **Cure characteristics** | | | | | | |
|---|---|---|---|---|---|---|
| ML, dNm | 2.46 | 2.28 | 2.53 | 2.15 | 2.36 | 2.53 |
| MH, dNm | 16.62 | 17.21 | 5.06 | 21.15 | 10.9 | 22.05 |
| ts2, minute | 0.76 | 0.82 | 3.93 | 0.63 | 0.89 | 0.69 |
| t50, minutes | 1.29 | 1.52 | 2.33 | 1.09 | 1.42 | 1.74 |
| t90, minutes | 4.35 | 3.97 | 5.05 | 2.94 | 3.8 | 6.26 |

| **Compression set, 25% Deflection** | | | | | | |
|---|---|---|---|---|---|---|
| Compression Set 200°C 70h, % | 37 | 39 | - | 30 | 59 | 30 |
| Compression Set 225°C 70h, % | 53 | 56 | - | 45 | 80 | 45 |
| Compression Set 250°C 70h, % | 88 | 82 | - | 67 | 104 | 68 |

| **Physical Properties** | | | | | | |
|---|---|---|---|---|---|---|
| Hardness, Shore A | 71 | 72 | - | 74 | 67 | 74 |
| M50, MPa | 1.97 | 2.23 | - | 2.74 | 1.57 | 2.7 |
| M100, MPa | 5.44 | 6.32 | - | 9.14 | 2.64 | 7.88 |
| M200, MPa | 19.5 | 0 | - | 0 | 8.9 | 0 |
| M300, MPa | 0 | 0 | - | 0 | 16.2 | 0 |
| Tb, MPa | 19.6 | 18.9 | - | 17.3 | 17.1 | 15.5 |
| Eb(%) | 201 | 180 | - | 136 | 328 | 145 |
| | | | | | | |

| **Retention of Physical Properties After Age 275°C/air/70h** | | | | | | |
|---|---|---|---|---|---|---|
| Hardness, %retention | 101 | 103 | - | 107 | 108 | 101 |
| M50, %retention | 113 | 109 | - | 156 | 140 | 100 |
| M100, %retention | 92 | 90 | - | 136 | 174 | 88 |
| Tb, %retention | 74 | 88 | - | 99 | 70 | 110 |
| Eb, %retention | 99 | 124 | - | 94 | 58 | 131 |

### Examples 23-25 and Comparative Example L

### Preparation of Diallyldioctylstannane

A 4-neck 500 mL flask equipped with a dropping funnel, septa, thermowell adaptor, stir bar, and condenser further attached to a N₂ tee was charged with allylmagnesium bromide (Aldrich, 1.0M in diethyl ether, 200 mL, 200 mmol). The dropping funnel was charged with dioctyldichlorotin (Alfa Aesar, 21 g, 50.5 mmol) dissolved in 50 mL of diethyl ether. The reaction flask was set to stir and cooled with an ice water bath, then the dioctyldichlorotin solution was added over a 45 minute period. The reaction mixture temperature increased to 20°C. The mixture was refluxed (ca. 60-65°C reaction mixture temperature) for 3h, then cooled and allowed to stand at room temperature overnight. The reaction mixture was cooled in an ice water bath, then 35 mL of saturated aq. ammonium chloride solution was slowly added. The reaction mixture was filtered through a plug of glass wool into a beaker with 100g of ice. The solids in the flask were triturated with hexane (3x100 mL), then the hexane extracts were filtered and added to the ice/ether reaction mixture. This mixture was stirred several minutes to let any gases evolve, then transferred to a separatory funnel. The aqueous layer was separated and washed with 100 mL of hexane. The organic layers were then combined and washed with 200 mL of saturated ammonium chloride solution and 200 mL of brine, dried over MgSO₄, filtered, concentrated on a rotary evaporator, then further dried at 50°C/0.2 mmHg to afford 20g (46.8 mmol, 93% yield) of light yellow oil. ¹H NMR CDCl₃ 5.95 (m, 2H), 4.83 (m, 2H), 4.70 (m, 2H), 1.84 (m, 4H), 1.56 (m, 4H), 1.25-1.37 (m, 20H), 0.9-1.4 (m, 10H); ¹³C NMR CDCl₃ 137.5 (²J_{Sn-C} 44 Hz), 109.8 (³J_{Sn-C} 46 Hz), 34.3 (³J_{Sn-C} 51 Hz), 32.0, 29.3, 29.2, 26.7 (²J_{Sn-C} 22,33 Hz), 22.7, 16.3 (¹J_{Sn-C} 241,252 Hz), 14.1, 9.8 (¹J_{Sn-C} 308,322 Hz); ¹¹⁹Sn NMR neat, -26.4 ppm vs. ext. neat Bu₄N (-12 ppm).

Curable compositions for Examples 23-25 and Comparative Example L were made by compounding the ingredients on a two-roll mill. Formulations are shown in Table IX. Fluoroelastomer 2 was Viton® GBL900, a vinylidene fluoride, hexafluoropropylene, tetrafluoroethylene copolymer having bromine cure sites, available from DuPont.

The compositions were molded into slabs and o-rings by press curing at 177°C for 12 minutes. The samples were then post-cured at 232°C for 16 hours in air. Curing and physical property data are shown in Table IX.

This data shows addition of diallyldioctylstannane to a bromine-containing elastomer comprising TFE, VF₂, and HFP provides cured articles with excellent properties.

**TABLE IX**

| Ingredient, phr | Comp. Example L | Example 23 | Example 24 | Example 25 |
|---|---|---|---|---|
| Fluoroelastomer 2 | 100 | 100 | 100 | 100 |
| TAIC | 3 | 3 | | 3 |
| Diallyldioctylstannane | 0 | 2.34 | 2.34 | 1.17 |
| MT Black | 30 | 30 | 30 | 30 |
| VAROX DBPH-50 | 2 | 2 | 2 | 2 |
| Zinc Oxide | 3 | 3 | 3 | 3 |
| Micro-cel E | 1 | 1 | 1 | 1 |

| **Curing characteristics** | | | | |
|---|---|---|---|---|
| ML, dNm | 2.37 | 1.95 | 2.2 | 2.04 |
| MH, dNm | 17.48 | 24.53 | 14.85 | 21.08 |
| ts2, minutes | 0.79 | 0.6 | 0.81 | 0.58 |
| t50, minutes | 1.4 | 1.3 | 1.67 | 1.18 |
| t90, minutes | 4.72 | 4.39 | 5.13 | 3.95 |

| **25% Deflection Compression set** | | | | |
|---|---|---|---|---|
| Compression Set 200°C 22h, % | 21 | 10 | 24 | 19 |
| Compression Set 200°C 70h, % | 37 | 26 | 40 | 31 |
| Compression Set 225°C 70h, % | 59 | 45 | 66 | 51 |
| Compression Set 250°C 70h, % | 91 | 79 | 97 | 85 |

| **Physical Properties** | | | | |
|---|---|---|---|---|
| Hardness, Shore A | 71 | 77 | 71 | 75 |
| M50, MPa | 2.1 | 3.56 | 1.97 | 3.1 |
| M100, MPa | 5.85 | 12.4 | 4.27 | 10.4 |
| M200, MPa | 0 | 0 | 14.3 | 0 |
| Tb, MPa | 15.7 | 17.5 | 16.6 | 17.2 |
| Eb (%) | 168 | 121 | 227 | 132 |

| **Retention of Physical Properties After Age 275°C/air/70h** | | | | |
|---|---|---|---|---|
| Hardness, %retention | 101 | 112 | 114 | 107 |
| M50, %retention | 101 | 231 | 229 | 173 |
| M100, %retention | 87 | 165 | 241 | 139 |
| Tb, %retention | 110 | 123 | 66 | 108 |
| Eb, %retention | 134 | 86 | 45 | 96 |

### Examples 26-29 and Comparative Example M

### Preparation of Allyltrioctylstannane

A 4-neck 500 mL flask equipped with a dropping funnel, septa, thermowell adaptor, stir bar, and condenser further attached to a N₂ tee was charged with allylmagnesium bromide (Aldrich, 1.0M in diethyl ether, 76 mL, 76 mmol). The flask was cooled with an ice water bath, then tri-n-octyltin chloride (Chemtura, Bergkamen, Germany, 25g, 51 mmol) was added via the dropping funnel dropwise over a 30 minute time period. The dropping funnel was rinsed with 10 mL dry ether, then the mixture was refluxed in a 48°C oil bath for 4 hours. An additional 125 mL of dry ether was added after the first 30 minutes of heating to facilitate stirring of the high solids mixture. The mixture was allowed to stand overnight at room temperature, then the flask was cooled in an ice water bath, and 35 mL of saturated aq. ammonium chloride solution was slowly added. The reaction mixture was combined with 100g of ice and 100 mL of hexane. The aqueous layer was separated and washed with hexane (3x100 mL). The organic layers were then stirred with 100 mL of saturated ammonium chloride solution for 5 minutes. The organic layer was separated then stirred with 100 mL of 10% potassium fluoride solution for 5 minutes. The organic layer was then washed with brine (1x100 mL), dried over MgSO₄, filtered, concentrated on a rotary evaporator, then further dried at 50°C/0.2 mmHg for 3 hours to afford 23.5g (47.1 mmol, 93% yield) of light yellow oil. ¹H NMR CDCl₃ 5.95 (m, 1H), 4.80 (m, 1 H), 4.66 (dd, 10.2, 2 Hz, 1 H), 1.79 (d, 8.7 Hz, 2H), 1.43-1.62 (m, 6H), 1.21-1.40 (m, 30H), 0.8-1.01 (m, 15H); ¹³C NMR CDCl₃ 138.2 (²J_{Sn-C} 42 Hz), 109.1 (³J_{Sn-C} 44 Hz), 34.4 (³J_{Sn-C} 50 Hz), 32.0, 29.32, 29.25, 26.9 (²J_{Sn-C} 19 Hz), 22.7, 16.3 (¹J_{Sn-C} 243, 234 Hz), 14.1, 9.5 (¹J_{Sn-C} 317, 303 Hz); ¹¹⁹Sn NMR neat, -18.6 ppm vs. ext. neat Bu₄N (-12 ppm).

### Preparation of Vinyltrioctylstannane

A 4-neck 500 mL flask equipped with a dropping funnel, septa, thermowell adaptor, stir bar, and condenser further attached to a N₂ tee was charged with vinylmagnesium bromide (Aldrich, 1.0M in THF, 65 mL, 65 mmol). The flask was cooled with an ice water bath, then tri-n-octyltin chloride (Chemtura, Bergkamen, Germany, 25g, 51 mmol) was added via the dropping funnel dropwise over a 30 minute time period. The dropping funnel was rinsed with 5 mL dry THF then the mixture was refluxed in a 80°C oil bath for 3 hours. The mixture was allowed to stand overnight at room temperature, then the flask was cooled in an ice water bath, and 30 mL of saturated aq. ammonium chloride solution was slowly added. The reaction mixture was filtered through Whatman #1 filter paper. The solids were washed with ether which was combined with the reaction mixture filtrate and washed with saturated ammonium chloride solution (1x100 mL), then with brine (1x100 mL), dried over MgSO₄, filtered, concentrated on a rotary evaporator, then further dried at 50°C/0.2 mmHg for 3 hours to afford 22.8g (47.0 mmol, 93% yield) of light yellow oil. ¹H NMR CDCl₃ 6.48 (dd, 21, 14 Hz, 1H), 6.16 (dd, 14, 4 Hz, 1H), 5.67 (dd, 21, 4 Hz, 1 H), 1.54 (m, 6H), 1.28 (m, 30H), 0.90 (m, 15H); ¹³C NMR CDCl₃ 139.3 (¹J_{Sn-C} 375, 357 Hz), 133.6, 34.4 (³J_{Sn-C} 51 Hz), 32.0, 29.34, 29.25, 26.9 (²J_{Sn-C} 21 Hz), 22.7, 14.1, 9.7 (¹J_{Sn-C} 342, 327 Hz); ¹¹⁹Sn NMR neat, -50.4 ppm vs. ext. neat Bu₄N (-12 ppm).

Curable compositions for Examples 26-29 and Comparative Example M were made by compounding the ingredients on a two-roll mill. Formulations are shown in Table X. Fluoroelastomer 2 was Viton® GBL900, a vinylidene fluoride, hexafluoropropylene, tetrafluoroethylene copolymer having bromine cure sites, available from DuPont.

The compositions were molded into slabs and o-rings by press curing at 177°C for 10 minutes. The samples were then post-cured at 232°C for 16 hours in air. Curing characteristics and physical properties are shown in Table X.

This data shows that a copolymer of VF₂, TFE, and HFP with Br-cure sites can be crosslinked with allyltrioctylstannane or vinyltrioctylstannane and that these compounds in combination with TAIC provide better compression set than TAIC alone.

**TABLE X**

| Ingredient, phr | Comp. Example M | Example 26 | Example 27 | Example 28 | Example 29 |
|---|---|---|---|---|---|
| Fluoroelastomer 2 | 100 | 100 | 100 | 100 | 100 |
| TAIC | 3 | 3 | | 3 | |
| Allyltrioctylstannane | | 2.7 | 2.7 | | |
| Vinyltrioctylstannane | | | | 2.7 | 2.7 |
| MT Black | 30 | 30 | 30 | 30 | 30 |
| VAROX DBPH-50 | 2 | 2 | 2 | 2 | 2 |
| Zinc Oxide | 3 | 3 | 3 | 3 | 3 |
| Micro-cel E | 1 | 1 | 1 | 1 | 1 |

| **Curing characteristics** | | | | | |
|---|---|---|---|---|---|
| ML, dNm | 2.32 | 1.77 | 2.03 | 1.99 | 2.28 |
| MH, dNm | 16.31 | 19.78 | 10.9 | 19.45 | 8.61 |
| ts2, minutes | 0.75 | 0.68 | 0.87 | 0.69 | 1.1 |
| t50, minutes | 1.35 | 1.32 | 1.4 | 1.24 | 1.49 |
| t90, minutes | 4.98 | 3.78 | 4.14 | 3.45 | 4.04 |

| **Mooney Viscosity 121 °C** (large rotor) | | | | | |
|---|---|---|---|---|---|
| Init | 144.1 | 107.5 | 125.3 | 127.0 | 142.1 |
| Final | 86.2 | 59.5 | 64.1 | 74.6 | 84.6 |
| ML | 86.2 | 59.4 | 64.1 | 73.7 | 84.5 |

| **Compression Set, 25% Deflection** | | | | | |
|---|---|---|---|---|---|
| Compression Set 200°C 70h | 34 | 29 | 49 | 35 | 69 |
| Compression Set 250°C 70h | 109 | 70 | 94 | 71 | 102 |
| Compression Set 250°C 168h | 109 | 110 | 117 | 111 | 117 |

| **Physical Properties** | | | | | |
|---|---|---|---|---|---|
| Hardness, Shore A | 71 | 77 | 70 | 77 | 68 |
| M50, MPa | 2.24 | 3.11 | 1.87 | 3.3 | 1.68 |
| M100, MPa | 6.2 | 8.9 | 3.39 | 9.32 | 3.11 |
| M200, MPa | 0 | 0 | 10.18 | 0 | 8.79 |
| M300, MPa | 0 | 0 | 0 | 0 | 0 |
| Tb, MPa | 20.35 | 14.59 | 12.61 | 16.19 | 14.21 |
| Eb (%) | 196 | 136 | 229 | 141 | 275 |

| **Retention of Physical Properties After Age 275°C/air/70h** | | | | | |
|---|---|---|---|---|---|
| Hardness, %retention | 104 | 107 | 113 | 107 | 118 |
| M50, %retention | 101 | 158 | 185 | 189 | 246 |
| M100, %retention | 83 | 136 | 230 | 154 | 302 |
| Tb, %retention | 78 | 114 | 120 | 96 | 103 |
| Eb, %retention | 129 | 98 | 75 | 77 | 54 |

### Examples 30-31 and Comparative Example N

Curable compositions for Examples 30-31 and Comparative Example N were made by compounding the ingredients on a two-roll mill. Formulations are shown in Table XI. Fluoroelastomer 6 was a copolymer of tetrafluoroethylene and perfluoro(methyl vinyl ether) having predominantly iodine endgroups.

The compositions were molded into slabs and o-rings by press curing at 155°C for 15 minutes. The samples were then post-cured at 260°C for 22 hours in nitrogen. Curing characteristics and physical properties are shown in Table XI.

The data shows that addition of allyltriphenyltin to an iodine-containing fluoroelastomer provides cured articles with excellent tensile properties.

**TABLE XI**

| Inqredient, phr | Comp. Example N | Example 30 | Example 31 |
|---|---|---|---|
| Fluoroelastomer 6 | 100 | 100 | 100 |
| Allyltriphenyltin | | 0.58 | 0.58. |
| TAIC DLC 72%⁶ | 4.2 | 4.2 | |
| MT Carbon Black | 15 | 15 | 15 |
| VAROX DBPH-50 | 2.04 | 2.04 | 2.04 |
| | | | |

| **Curing characteristics, 155 °C, 24 minutes** | | | |
|---|---|---|---|
| ML, dNm | 2.33 | 2.23 | 2.26 |
| MH, dNm | 37.79 | 38.3 | 15.27 |
| ts2, minutes | 0.71 | 0.73 | 0.9 |
| t50, minutes | 2.15 | 2.3 | 1.46 |
| t90, minutes | 6.25 | 6.04 | 9.46 |

| **Physical properties** | | | |
|---|---|---|---|
| Hardness, Shore A | 83 | 83 | 73 |
| M50, MPa | 5.27 | 6.23 | 2.43 |
| M100, MPa | 13.1 | 14.5 | 6.29 |
| M200, MPa | 0 | 0 | 21.0 |
| Tb, MPa | 21.2 | 23.2 | 24.2 |
| Eb, % | 147 | 144 | 221 |

| **Retention of Physical Properties After Age 275°C/air/70h** | | | |
|---|---|---|---|
| Hardness, % Retention | 96 | 96 | 103 |
| M50, % Retention | 6& | 61 | 107 |
| M100, % Retention | 52 | 48 | 87 |
| M200, % Retention | | | 65 |
| Tb, % Retention | 77 | 68 | 66 |
| =b, % Retention | 191 | 197 | 125 |
| | | | |

| **Compression set, 25% Deflection** | | | |
|---|---|---|---|
| Compression Set 200°C 70h | 23 | 30 | 47 |
| Compression Set 250°C 70h | 81 | 82 | 82 |

| | | | |
|---|---|---|---|
| ⁶70-74% triallyl isocyanurate, 26-30% silicon dioxide blend, available from Natrochem, Inc. | | | |

## Claims

1. A curable fluoroelastomer composition comprising:
A) a fluoroelastomer having chloro, bromo or iodo cure sites;
B) a free radical generating compound; and
C) an unsaturated metal compound coagent having the formula Y₍₄₋ₙ₎MXₙ wherein Y is selected from alkyl, aryl, carboxylic acid, or alkyl ester groups; M is selected from Si, Ge, Sn, or Pb; X is an allyl group CR¹R²CR³=CR⁴R⁵, vinyl group CR¹=CR²R³, allenyl group CR¹=C=CR²R³, alkynyl group C=CR¹, or propargyl group CR¹R²C=CR³; R¹-R⁵ are selected independently from the group consisting of H, F, alkyl, aryl, heterocycle, or perfluoroalkyl groups; and n is 1, 2, or 3.

2. The curable composition of claim 1 wherein said unsaturated metal compound coagent is of the formula Y₍₄₋ₙ₎MXₙ wherein M is Sn, X is allyl group CR¹R²CR³=CR⁴R⁵, Y is alkyl or aryl, R¹-R⁵ are H and n is1 or 2.

3. The curable composition of claim 2 wherein said unsaturated metal compound coagent is allyltrioctylstannane.

4. The curable composition of claim 2 wherein said unsaturated metal compound coagent is allyltriphenylstannane.

5. The curable composition of claim 2 wherein said unsaturated metal compound coagent is diallyldioctylstannane.

6. The curable composition of claim 1 wherein said unsaturated metal compound coagent is of the formula Y₍₄₋ₙ₎MXₙ wherein M is Sn, X is vinyl group CR¹=CR²R³, Y is alkyl or aryl, R¹-R³ are H and n is 1.

7. The curable composition of claim 6 wherein said unsaturated metal compound coagent is vinyltrioctylstannane.

8. The curable composition of claim 6 wherein said unsaturated metal compound coagent is vinyltriphenylstannane.

9. The curable composition of claim 1 wherein said unsaturated metal compound coagent is of the formula Y₍₄₋ₙ₎MXₙ wherein M is Ge, X is allyl group CR¹R²CR³=CR⁴R⁵, Y is alkyl or aryl, R¹-R⁵ are H and n is 1.

10. The curable composition of claim 9 wherein said unsaturated metal compound coagent is allyltrioctylgermane.

11. The curable composition of claim 9 wherein said unsaturated metal compound coagent is allyltriphenylgermane.

12. The curable composition of one of claims 1-11 further comprising a multifunctional coagent.

13. The curable composition of claim 12 wherein said multifunctional coagent is selected from the group consisting of triallyl cyanurate, trimethacryl isocyanurate, triallyl isocyanurate, trimethallyl isocyanurate, triacryl formal, triallyl trimellitate, N,N'-m-phenylene bismaleimide, diallyl phthalate, tetraallylterephthalamide, tri(diallylamine)-s-triazine, triallyl phosphite, bis-olefins and N,N-diallylacrylamide.

14. The curable composition of claim 13 wherein said multifunctional coagent is triallyl isocyanurate.

15. The curable composition of claim 1 wherein said free radical generating compound is an organic peroxide, or wherein said free radical generating compound is a photoinitiator.

## Patentansprüche

1. Härtbare Fluorelastomerzusammensetzung umfassend:
A) ein Fluorelastomer, das Chlor-, Brom- oder Iodhärtungorte aufweist;
B) eine freie Radikale erzeugende Verbindung; und
C) ein ungesättigtes Metallverbindungcoagens, das die Formel Y₍₄₋ₙ₎MXₙ aufweist, wobei Y unter Alkyl-, Aryl-, Carbonsäure- oder Alkylestergruppen ausgewählt wird, M unter Si, Ge, Sn oder Pb ausgewählt wird; X eine Allylgruppe CR¹R²CR³=CR⁴R⁵, Vinylgruppe CR¹=CR²R³, Allenylgruppe CR¹=C=CR²R³, Alkynylgruppe C≡CR¹ oder Propargylgruppe CR¹R²C≡CR³ ist; R¹-R³ unabhängig aus der Gruppe ausgewählt sind bestehend aus H, F, Alkyl-, Aryl-, heterocyclischen oder Perfluoralkylgruppen; und n 1, 2 oder 3 beträgt.

2. Härtbare Zusammensetzung nach Anspruch 1, wobei das ungesättigte Metallverbindungcoagens die Formel Y₍₄₋ₙ₎MXₙ aufweist, wobei M Sn ist, X eine Allylgruppe CR¹R²CR³=CR⁴R⁵ ist, Y Alkyl oder Aryl ist, R¹-R⁵ H sind und n 1 oder 2 beträgt.

3. Härtbare Zusammensetzung nach Anspruch 2, wobei das ungesättigte Metallverbindungcoagens Allyltrioctylstannan ist.

4. Härtbare Zusammensetzung nach Anspruch 2, wobei das ungesättigte Metallverbindungcoagens Allyltriphenylstannan ist.

5. Härtbare Zusammensetzung nach Anspruch 2, wobei das ungesättigte Metallverbindungcoagens Diallyldioctylstannan ist.

6. Härtbare Zusammensetzung nach Anspruch 1, wobei das ungesättigte Metallverbindungcoagens die Formel Y₍₄₋ₙ₎MXₙ aufweist, wobei M Sn ist, X eine Vinylgruppe CR¹=CR²R³ ist, Y Alkyl oder Aryl ist, R¹-R³ H sind und n 1 beträgt.

7. Härtbare Zusammensetzung nach Anspruch 6, wobei das ungesättigte Metallverbindungcoagens Vinyltrioctylstannan ist.

8. Härtbare Zusammensetzung nach Anspruch 6, wobei das ungesättigte Metallverbindungcoagens Vinyltriphenylstannan ist.

9. Härtbare Zusammensetzung nach Anspruch 1, wobei das ungesättigte Metallverbindungcoagens die Formel Y₍₄₋ₙ₎MXₙ aufweist, wobei M Ge ist, X eine Allylgruppe CR¹R²CR³=CR⁴R⁵ ist, Y Alkyl oder Aryl ist, R¹-R⁵ H sind und n 1 beträgt.

10. Härtbare Zusammensetzung nach Anspruch 9, wobei das ungesättigte Metallverbindungcoagens Allyltrioctylgerman ist.

11. Härtbare Zusammensetzung nach Anspruch 9, wobei das ungesättigte Metallverbindungcoagens Allyltriphenylgerman ist.

12. Härtbare Zusammensetzung nach einem der Ansprüche 1 - 11, ferner ein multifunktionelles Coagens umfassend.

13. Härtbare Zusammensetzung nach Anspruch 12, wobei das multifunktionelle Coagens aus der Gruppe ausgewählt ist bestehend aus Triallylcyanurat, Trimethacrylisocyanurat, Triallylisocyanurat, Trimethallylisocyanurat, Triacrylformal, Triallyltrimellitat, N,N'-m-Phenylenbismaleimid, Diallylphthalat, Tetraallylterephthalamid, Tri(diallylamin)-s-triazin, Triallylphosphit, Bis-Olefinen und N,N-Diallylacrylamid.

14. Härtbare Zusammensetzung nach Anspruch 13, wobei das multifunktionelle Coagens Triallylisocyanurat ist.

15. Härtbare Zusammensetzung nach Anspruch 1, wobei die freie Radikale erzeugende Verbindung ein organisches Peroxid ist oder wobei die freie Radikale erzeugende Verbindung ein Photoinitiator ist.

## Revendications

1. Composition d'élastomère fluoré durcissable comprenant:
A) un élastomère fluoré ayant des sites de durcissement chloro, bromo ou iodo;
B) un composé générateur de radicaux libres; et
C) un coagent composé métallique insaturé ayant la formule Y₍₄₋ₙ₎MXₙ dans laquelle Y est sélectionné parmi les groupes alkyle, aryle, acide carboxylique, ou ester d'alkyle; M est sélectionné parmi Si, Ge, Sn, ou Pb; X est un groupe allyle CR¹R²CR³=CR⁴R⁵, un groupe vinyle CR¹=CR²R³, un groupe allényle CR¹=C=CR²R³, un groupe alcynyle C≡CR¹, ou un groupe propargyle CR¹R²C≡CR³; R¹ à R⁵ sont indépendamment sélectionnés parmi le groupe constitué de l'atome H, F, des groupes alkyle, aryle, hétérocycle, ou perfluoroalkyle; et n a la valeur de 1, 2, ou 3.

2. Composition durcissable selon la revendication 1, dans laquelle ledit coagent composé métallique insaturé est de formule Y₍₄₋ₙ₎MXₙ dans laquelle M est Sn, X est un groupe allyle CR¹R²CR³=CR⁴R⁵, Y est un groupe alkyle ou aryle, R¹ à R⁵ sont des atomes H et n a la valeur de 1 ou 2.

3. Composition durcissable selon la revendication 2, dans laquelle ledit coagent composé métallique insaturé est le stannane d'allyltrioctyle.

4. Composition durcissable selon la revendication 2, dans laquelle ledit coagent composé métallique insaturé est le stannane d'allyltriphényle.

5. Composition durcissable selon la revendication 2, dans laquelle ledit coagent composé métallique insaturé est le stannane de diallyldioctyle.

6. Composition durcissable selon la revendication 1, dans laquelle ledit coagent composé métallique insaturé est de formule Y₍₄₋ₙ₎MXₙ dans laquelle M est Sn, X est un groupe vinyle CR¹=CR²R³, Y est un groupe alkyle ou aryle, R¹ à R³ sont des atomes H et n a la valeur de 1.

7. Composition durcissable selon la revendication 6, dans laquelle ledit coagent composé métallique insaturé est le stannane de vinyltrioctyle.

8. Composition durcissable selon la revendication 6, dans laquelle ledit coagent composé métallique insaturé est le stannane de vinyltriphényle.

9. Composition durcissable selon la revendication 1, dans laquelle ledit coagent composé métallique insaturé est de formule Y₍₄₋ₙ₎MXₙ dans laquelle M est Ge, X est un groupe allyle CR¹R²CR³=CR⁴R⁵, Y est un groupe alkyle ou aryle, R¹ à R⁵ sont des atomes H et n a la valeur de 1.

10. Composition durcissable selon la revendication 9, dans laquelle ledit coagent composé métallique insaturé est le germane d'allyltrioctyle.

11. Composition durcissable selon la revendication 9, dans laquelle ledit coagent composé métallique insaturé est le germane d'allyltriphényle.

12. Composition durcissable selon l'une quelconque des revendications 1 à 11 comprenant en outre un coagent multifonctionnel.

13. Composition durcissable selon la revendication 12, dans laquelle ledit coagent multifonctionnel est sélectionné parmi le groupe constitué du cyanurate de triallyle, de l'isocyanurate de triméthacryle, de l'isocyanurate de triallyle, de l'isocyanurate de triméthallyle, du triacryl formal, du trimellitate de triallyle, du N,N'-m-phénylène bismaléimide, du phtalate de diallyle, du tétraallyltéréphtalamide, de la tri(diallylamine)-s-triazine, du triallyl phosphite, des bis-oléfines et du N,N-diallylacrylamide.

14. Composition durcissable selon la revendication 13, dans laquelle ledit coagent multifonctionnel est l'isocyanurate de triallyle.

15. Composition durcissable selon la revendication 1, dans laquelle ledit composé générateur de radicaux libres est un peroxyde organique, ou dans laquelle ledit composé générateur de radicaux libres est un photoinitiateur.
